# EUROPEAN PATENT APPLICATION

(11) **EP 4 318 722 A1**
(43) Date of publication of application: **07.02.2024**
(21) Application number: 22777577.2
(22) Date of filing: 23.03.2022
(51) Int. Cl.: H01M 10/0585, H01M 4/134, H01M 10/052, H01M 10/0562, H01M 10/0565

(54) **LITHIUM SECONDARY BATTERY**

(30) Priority: 29.03.2021 JP 2021055645; 03.03.2022 JP 2022032266
(71) Applicant: NISSAN MOTOR CO., LTD., Kanagawa 221-0023 (JP)
(72) Inventor: TAKADA, Harumi, Atsugi-shi, Kanagawa 243-0123 (JP); MATSUNO, Tomohisa, Atsugi-shi, Kanagawa 243-0123 (JP); UEDA, Naoki, Atsugi-shi, Kanagawa 243-0123 (JP); SAKAMOTO, Kazuyuki, Atsugi-shi, Kanagawa 243-0123 (JP)
(74) Representative: Grünecker Patent- und Rechtsanwälte PartG mbB
(86) International application number: PCT/JP2022/013655
(87) International publication number: WO 2022/210191

(57) **Abstract**

A lithium secondary battery includes: a power-generating element that includes a positive electrode in which a positive electrode active material layer containing a positive electrode active material capable of absorbing and desorbing lithium ions is disposed on a surface of a positive electrode current collector, a negative electrode having a negative electrode current collector, where lithium metal is deposited on the negative electrode current collector during charging, and a solid electrolyte layer interposed between the positive electrode and the negative electrode and containing a solid electrolyte; and a pressurizing member that pressurizes the power-generating element at a predetermined pressure in a direction of lamination thereof, in which when the power-generating element is viewed in a planar view, at least a part of an outer peripheral end of the positive electrode active material layer is located inside an outer peripheral end of the solid electrolyte layer, and a first functional layer is provided on at least a part of a principal surface of the solid electrolyte layer facing the negative electrode current collector and at least a part of a side surface of the solid electrolyte layer, the first functional layer having electronic insulation properties and lithium ion conductivity and being more stable in reductive decomposition due to contact with lithium metal than the solid electrolyte.

## Description

### TECHNICAL FIELD

The present invention relates to a lithium secondary battery.

### BACKGROUND ART

In recent years, in order to fight global warming, there is a strong need for reduction of the amount of carbon dioxide emissions. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium ion secondary battery for consumer use used in a mobile phone, a notebook computer, and the like. Therefore, a lithium ion secondary battery having the highest theoretical energy among all practical batteries has attracted attention, and is currently being rapidly developed.

Here, lithium ion secondary batteries that are currently widespread use a combustible organic electrolyte solution as an electrolyte. In such liquid-based lithium ion secondary batteries, safety measures against liquid leakage, short circuit, overcharge, and the like are more strictly required than other batteries.

Therefore, in recent years, research and development on an all-solid lithium secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium secondary battery, in principle, various problems caused by combustible organic electrolyte solution do not occur unlike the conventional liquid-based lithium ion secondary battery. In general, use of a high-potential and large-capacity positive electrode material and a large-capacity negative electrode material can achieve significant improvement in output density and energy density of a battery.

In the related art, as one type of all-solid lithium secondary battery, a so-called lithium-deposition-type has been known in which lithium metal is deposited on a negative electrode current collector in a charging process (see, for example, JP 2019-61867 A). In the charging process of the lithium-deposition-type all-solid lithium secondary battery, the lithium metal is deposited between a solid electrolyte layer and the negative electrode current collector. In the lithium secondary battery described in JP 2019-61867 A, an electrolyte layer interposed between a positive electrode containing lithium and a negative electrode containing lithium is configured to include an electrolyte layer including a first electrolyte and a second electrolyte containing iodine provided between the electrolyte layer and the negative electrode, the ion conductivity of the second electrolyte being smaller than the ion conductivity of the first electrolyte. According to JP 2019-61867 A, with such a configuration, even when the interface between the electrolyte layer and the negative electrode is not flat, ununiform deposition of lithium is eliminated, leading to suppression of dendrite formation. As a result, variations in internal resistance and a decrease in discharging capacity due to the growth of lithium dendrites are reduced, and it is possible to provide a lithium battery having excellent charge and discharge characteristics.

### SUMMARY OF INVENTION

### Technical Problem

However, according to the study of the present inventors, it has been found that a sufficient charge and discharge efficiency may still not be achieved even when the technique described in JP 2019-61867 A is used.

Therefore, an object of the present invention is to provide a means capable of further improving a charge and discharge efficiency in a lithium-deposition-type lithium secondary battery.

### Solution to Problem

The present inventors have carried out a diligent study to solve the problems described above. As a result, the present inventors have found that in a secondary battery including a lithium-deposition-type power-generating element and a pressurizing member that pressurizes the power-generating element in a direction of lamination thereof, a positive electrode active material layer is formed into a size which is one size smaller than a solid electrolyte layer, and a predetermined functional layer is provided on at least a part of a principal surface of the solid electrolyte layer facing a negative electrode current collector and at least a part of a side surface of the solid electrolyte layer, and thus the above-described problems can be solved. Therefore, they have completed the present invention.

That is, one embodiment of the present invention relates to a lithium secondary battery including: a power-generating element that includes a positive electrode in which a positive electrode active material layer containing a positive electrode active material capable of absorbing and desorbing lithium ions is disposed on a surface of a positive electrode current collector, a negative electrode having a negative electrode current collector, where lithium metal is deposited on the negative electrode current collector during charging, and a solid electrolyte layer interposed between the positive electrode and the negative electrode and containing a solid electrolyte; and a pressurizing member that pressurizes the power-generating element at a predetermined pressure in a direction of lamination thereof. In the lithium secondary battery, at least a part of the outer peripheral end of the positive electrode active material layer is located inside the outer peripheral end of the solid electrolyte layer, when the power-generating element is viewed in in planar view. The present invention is also characterized in that a first functional layer is provided on at least a part of a principal surface of the solid electrolyte layer facing the negative electrode current collector and at least a part of a side surface of the solid electrolyte layer, the first functional layer having electronic insulation properties and lithium ion conductivity and being more stable in reductive decomposition due to contact with lithium metal than the solid electrolyte.

### Advantageous Effects of Invention

According to the present invention, it is possible to further improve a charge and discharge efficiency in a lithium-deposition-type lithium secondary battery.

### BRIEF DESCRIPTION OF DRAWINGS

FIG. 1 is a cross-sectional view schematically illustrating an overall structure of a laminate type (internal parallel connection type) all-solid lithium secondary battery (laminate type secondary battery) as one embodiment of the present invention.
FIG. 2 is an enlarged cross-sectional view of a single battery layer of the laminate type secondary battery according to one embodiment of the present invention. FIG. 2 corresponds to a configuration of an evaluation cell produced in Example 1 to be described later.
FIG. 3 is an enlarged cross-sectional view of a single battery layer, showing a modified example of the laminate type secondary battery according to the present invention. FIG. 3 corresponds to a configuration of an evaluation cell produced in Example 5 to be described later.
FIG. 4 is a perspective view of the laminate type secondary battery according to one embodiment of the present invention.
FIG. 5 is a side view as viewed from direction A illustrated in FIG. 4.
FIG. 6 is an enlarged cross-sectional view of a single battery layer, showing a modified example of the laminate type secondary battery according to the present invention. FIG. 6 corresponds to a configuration of an evaluation cell produced in Example 2 to be described later.
FIG. 7 is an enlarged cross-sectional view of a single battery layer, showing a modified example of the laminate type secondary battery according to the present invention. FIG. 7 corresponds to a configuration of an evaluation cell produced in Example 3 to be described later.
FIG. 8 is a perspective view illustrating an appearance of the laminate type secondary battery according to one embodiment of the present invention.
FIG. 9 is an enlarged cross-sectional view of a single battery layer, showing a modified example of the laminate type secondary battery according to the present invention. FIG. 9 corresponds to a configuration of an evaluation cell produced in Example 4 to be described later.
FIG. 10 is an enlarged cross-sectional view of a single battery layer, showing an example of a laminate type secondary battery not according to the present invention. FIG. 10 corresponds to a configuration of an evaluation cell produced in Comparative Example 1 to be described later.
FIG. 11 is an enlarged cross-sectional view of a single battery layer, showing an example of a laminate type secondary battery not according to the present invention. FIG. 11 corresponds to a configuration of an evaluation cell produced in Comparative Example 2 to be described later.
FIG. 12 is an enlarged cross-sectional view of a single battery layer, showing an example of a laminate type secondary battery not according to the present invention. FIG. 12 corresponds to a configuration of an evaluation cell produced in Comparative Example 3 to be described later.
FIG. 13 is an enlarged cross-sectional view of a single battery layer, showing an example of a laminate type secondary battery not according to the present invention. FIG. 13 corresponds to a configuration of an evaluation cell produced in Comparative Example 4 to be described later.
FIG. 14 is an enlarged cross-sectional view of a single battery layer, showing a modified example of the laminate type secondary battery according to the present invention. FIG. 14 corresponds to a configuration of an evaluation cell produced in Example 14 to be described later.
FIG. 15 is an enlarged cross-sectional view of a single battery layer, showing a modified example of the laminate type secondary battery according to the present invention. FIG. 15 corresponds to a configuration of an evaluation cell produced in Example 18 to be described later.

### DESCRIPTION OF EMBODIMENTS

One embodiment of the present invention is a lithium secondary battery including: a power-generating element that includes a positive electrode in which a positive electrode active material layer containing a positive electrode active material capable of absorbing and desorbing lithium ions is disposed on a surface of a positive electrode current collector, a negative electrode having a negative electrode current collector, where lithium metal is deposited on the negative electrode current collector during charging, and a solid electrolyte layer interposed between the positive electrode and the negative electrode and containing a solid electrolyte; and a pressurizing member that pressurizes the power-generating element at a predetermined pressure in a direction of lamination thereof, in which when the power-generating element is viewed in planar view, at least a part of an outer peripheral end of the positive electrode active material layer is located inside an outer peripheral end of the solid electrolyte layer, and
a first functional layer is provided on at least a part of a principal surface of the solid electrolyte layer facing the negative electrode current collector and at least a part of a side surface of the solid electrolyte layer, the first functional layer having electronic insulation properties and lithium ion conductivity and being more stable in reductive decomposition due to contact with lithium metal than the solid electrolyte. In the lithium secondary battery according to the present embodiment, it is possible to further improve the charge and discharge efficiency in the lithium-deposition-type lithium secondary battery.

Hereinafter, the present embodiment will be described with reference to the drawings, but the technical scope of the present invention should be determined based on the description of the claims, and is not limited to the following embodiments. The dimensional ratios of the drawings are exaggerated for convenience of description and may differ from the actual ratios.

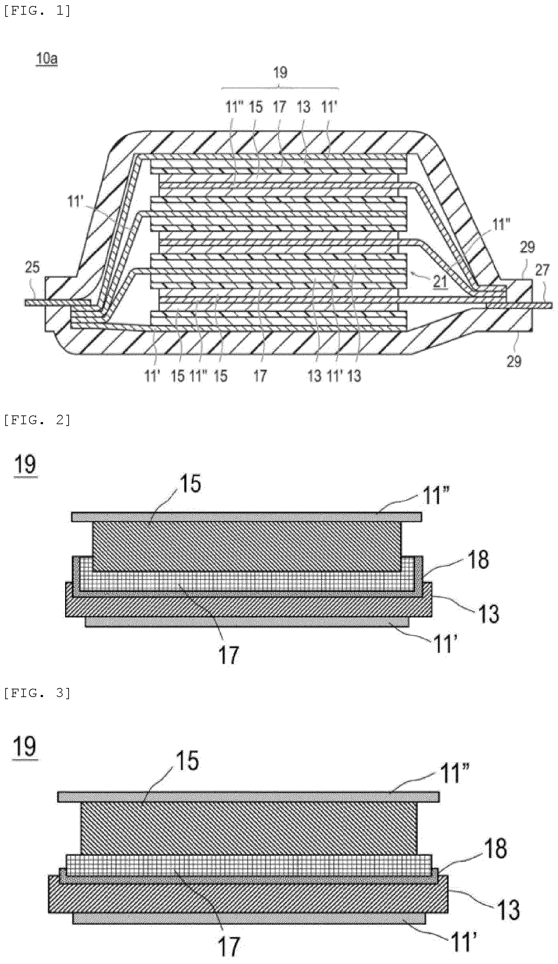

FIG. 1 is a cross-sectional view schematically illustrating an overall structure of a laminate type (internal parallel connection type) all-solid lithium secondary battery (hereinafter also simply referred to as "laminate type secondary battery") as one embodiment of the present invention. A laminate type secondary battery 10a illustrated in FIG. 1 has a structure in which a substantially rectangular shaped power-generating element 21 in which a charge and discharge reaction actually proceeds is sealed inside a laminate film 29 as the battery outer casing body. FIG. 1 shows a cross section of the laminate type secondary battery during charging, and thus a negative electrode active material layer 13 made of lithium metal is present between a negative electrode current collector 11' and a solid electrolyte layer 17. The pressurizing member (not illustrated) applies a confining pressure to the laminate type secondary battery 10a in the direction of lamination of the power-generating element 21. Accordingly, the volume of the power-generating element 21 is kept constant.

As illustrated in FIG. 1, the power-generating element 21 of the laminate type secondary battery 10a of the present embodiment has a configuration in which a negative electrode where the negative electrode active material layer 13 containing lithium metal is disposed on both surfaces of the negative electrode current collector 11', a solid electrolyte layer 17, and a positive electrode where a positive electrode active material layer 15 containing a lithium transition metal composite oxide is disposed on both surfaces of a positive electrode current collector 11" are laminated. Specifically, the negative electrode, the solid electrolyte layer, and the positive electrode are laminated in this order such that one negative electrode active material layer 13 and the positive electrode active material layer 15 adjacent thereto face each other with the solid electrolyte layer 17 interposed therebetween. Thus, the negative electrode, solid electrolyte layer, and positive electrode that are adjacent constitute one single battery layer 19. Therefore, it can be said that the laminate type secondary battery 10a illustrated in FIG. 1 has a configuration in which a plurality of single battery layers 19 is laminated to be electrically connected in parallel.

The negative electrode current collector 11' and the positive electrode current collector 11" have a structure in which a negative electrode current collecting plate 25 and a positive electrode current collecting plate 27 which are electrically connected to the respective electrodes (the negative electrode and the positive electrode) are respectively attached to the negative electrode current collector 11' and the positive electrode current collector 11" and are led to an outside of the laminate film 29 so as to be sandwiched between ends of the laminate film 29. The negative electrode current collecting plate 25 and the positive electrode current collecting plate 27 may be attached to the negative electrode current collector 11' and the positive electrode current collector 11" of the respective electrodes with a negative electrode terminal lead and a positive electrode terminal lead (not illustrated) interposed therebetween, respectively by ultrasonic welding, resistance welding, or the like as necessary.

FIG. 2 is an enlarged cross-sectional view of the single battery layer 19 of the laminate type secondary battery according to one embodiment of the present invention. As illustrated in FIG. 2, the single battery layer 19 constituting the laminate type secondary battery 10a according to the present embodiment has a positive electrode including the positive electrode current collector 11" and the positive electrode active material layer 15 disposed on the surface of the positive electrode current collector 11". Further, the solid electrolyte layer 17 containing a solid electrolyte is disposed on the surface of the positive electrode active material layer 15 on a side opposite to the positive electrode current collector 11". Here, in the embodiment illustrated in FIG. 2, an outer peripheral edge portion of the solid electrolyte layer 17 is extended to a side surface of the positive electrode active material layer 15 over the entire periphery thereof. As a result, the positive electrode active material layer 15 is configured to have a size which is one size smaller than the solid electrolyte layer 17. Specifically, when the power-generating element 21 is viewed in planar view, the entire periphery of the outer peripheral end of the positive electrode active material layer 15 is located inside the outer peripheral end of the solid electrolyte layer 17. With such a configuration, even when lithium metal constituting the negative electrode active material layer 13 is pushed out from the outer peripheral end of the solid electrolyte layer 17 toward the positive electrode active material layer 15 due to confining pressure from the pressurizing member, the lithium metal is less likely to come into contact with the side surface of the positive electrode active material layer 15. As a result, the effect of preventing a short circuit is further enhanced. The "side surface of the positive electrode active material layer" means a surface not facing the negative electrode current collector, among surfaces of the positive electrode active material layer which are not in contact with the positive electrode current collector. Here, as illustrated in FIG. 3, the outer peripheral edge portion of the solid electrolyte layer 17 need not be extended to the side surface of the positive electrode active material layer 15. However, even in this case, as illustrated in FIG. 3, when the power-generating element 21 is viewed in planar view, it is necessary that at least a part of the outer peripheral end of the positive electrode active material layer 15 is configured to be located inside the outer peripheral end of the solid electrolyte layer 17. This is because, even when lithium metal constituting the negative electrode active material layer 13 is pushed out from the outer peripheral end of the solid electrolyte layer 17 toward the positive electrode active material layer 15 due to confining pressure from the pressurizing member, the lithium metal is less likely to come into contact with the side surface of the positive electrode active material layer 15, and a short circuit can be prevented.

In the embodiment illustrated in FIG. 2, a first functional layer 18 is provided on the entire principal surface of the solid electrolyte layer 17 facing the negative electrode current collector 11' and the entire side surface of the solid electrolyte layer 17. The "side surface of the solid electrolyte layer" means a surface on which the solid electrolyte layer does not face either the positive electrode active material layer or the negative electrode current collector during discharging when the negative electrode active material layer 13 made of lithium metal is not present. The first functional layer 18 is a layer having electronic insulation properties and lithium ion conductivity. Further, the first functional layer 18 is characterized in that it is more stable in reductive decomposition due to contact with lithium metal than the solid electrolyte constituting the solid electrolyte layer 17. In the embodiment illustrated in FIG. 2, the first functional layer 18 is made of lithium fluoride (LiF). In a case where the first functional layer is also disposed on the side surface of the solid electrolyte layer, even when lithium metal deposited on the surface of the negative electrode current collector during charging is pushed out from the outer peripheral end of the solid electrolyte layer due to confining pressure from the pressurizing member, contact between the solid electrolyte layer and the negative electrode active material layer is prevented, resulting in suppression of deterioration of the solid electrolyte layer due to reductive decomposition. Further, the effective area of the lithium metal facing the positive electrode active material layer with the first functional layer and the solid electrolyte layer interposed therebetween is further increased, which leads an advantage that the charge and discharge efficiency can be further improved.

In addition, in the embodiment illustrated in FIG. 2, the negative electrode current collector 11' is configured to have a size which is one size smaller than the solid electrolyte layer 17. Furthermore, the negative electrode current collector 11' is configured to have a size which is one size larger than the positive electrode active material layer 15. Specifically, when the power-generating element 21 is viewed in planar view, the entire periphery of the outer peripheral end of the negative electrode current collector 11' is located inside the outer peripheral end of the solid electrolyte layer 17, and is located outside the outer peripheral end of the positive electrode active material layer 15. With such a configuration, it is possible to prevent the occurrence of a short circuit due to the negative electrode active material layer 13 made of lithium metal wrapping around the side of the positive electrode active material layer 15 beyond the outer peripheral end of the solid electrolyte layer 17 while suppressing the formation of dendrites of lithium metal at the end of the negative electrode. However, in some cases, the negative electrode current collector 11' may be configured to have the same size as the solid electrolyte layer 17 or a size which is one size larger than the solid electrolyte layer 17, or may be configured to have the same size as the positive electrode active material layer 15 or a size which is one size smaller than the positive electrode active material layer 15.

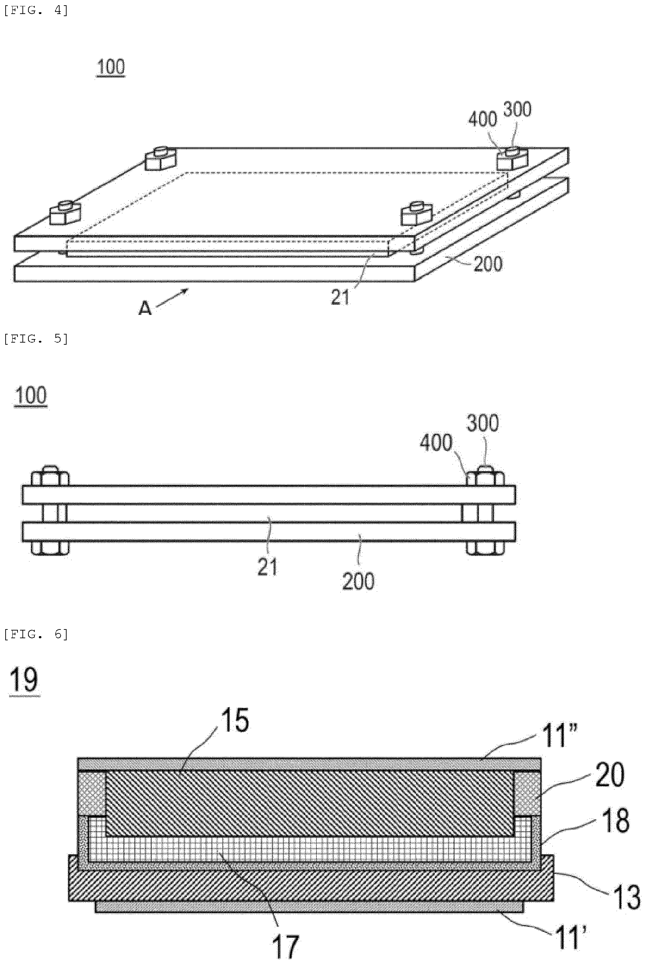

FIG. 4 is a perspective view of the laminate type secondary battery according to one embodiment of the present invention. FIG. 5 is a side view as viewed from direction A illustrated in FIG. 4.

As illustrated in FIGS. 4 and 5, a laminate type secondary battery 100 according to the present embodiment includes the power-generating element 21 sealed in the laminate film 29 illustrated in FIG. 1, two metal plates 200 sandwiching the power-generating element 21 sealed in the laminate film 29, and bolts 300 and nuts 400 as fastening members. The fastening members (the bolts 300 and the nuts 400) have a function of fixing the power-generating element 21 sealed in the laminate film 29 in a state of being sandwiched by the metal plates 200. As a result, the metal plates 200 and the fastening members (the bolts 300 and the nuts 400) function as a pressurizing member that pressurizes (confines) a power-generating element 21 in a direction of lamination of the power-generating element. The pressurizing member is not particularly limited as long as the pressurizing member can pressurize the power-generating element 21 in the direction of lamination of the power-generating element. Typically, a combination of plates formed of a material having rigidity such as the metal plates 200 and the above-described fastening members is used as the pressurizing member. In addition to the bolts 300 and the nuts 400, a tension plate that fixes the end of the metal plate 200 so as to confine the power-generating element 21 in the direction of lamination of the power-generating element, or the like may be used as a fastening member.

The lower limit of the load applied to the power-generating element 21 (confining pressure in the direction of lamination of the power-generating element) is, for example, 0.1 MPa or more, preferably 1 MPa or more, more preferably 3 MPa or more, and still more preferably 5 MPa or more. The upper limit of the confining pressure in the direction of lamination of the power-generating element is, for example, 100 MPa or less, preferably 70 MPa or less, more preferably 40 MPa or less, and still more preferably 10 MPa or less.

Hereinafter, main components of the laminate type secondary battery 10a described above will be described.

### [Positive Electrode Current Collector]

The positive electrode current collector is a conductive member that functions as a flow path for electrons emitted from a positive electrode toward an external load or flowing from a power source toward the positive electrode along with the progression of the battery reaction (charge and discharge reaction). A material constituting the positive electrode current collector is not particularly limited. As the material constituting the positive electrode current collector, for example, a metal or a resin having conductivity can be adopted. The thickness of the positive electrode current collector is not particularly limited, but is, for example, from 10 to 100 µm.

### [Positive Electrode Active Material Layer]

A positive electrode constituting the lithium secondary battery according to the present embodiment has a positive electrode active material layer containing a positive electrode active material capable of absorbing and desorbing lithium ions. The positive electrode active material layer 15 is disposed on the surface of the positive electrode current collector 11" as illustrated in FIG. 1.

The positive electrode active material is not particularly limited as long as it is a material that can desorb lithium ions in the process of charging the secondary battery and can absorb lithium ions in the process of discharging the secondary battery. An example of the positive electrode active material includes a positive electrode active material containing an M1 element and an O element, in which the M1 element includes at least one element selected from the group consisting of Li, Mn, Ni, Co, Cr, Fe, and P. Examples of the positive electrode active material include layered rock salt-type active materials such as LiCoO₂, LiMnO₂, LiNiO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, and Si-containing active materials such as Li₂FeSiO₄ and Li₂MnSiO₄. Examples of the oxide active material other than those described above include Li₄Ti₅O₁₂ and LiVO₂. In some cases, two or more kinds of positive electrode active materials may be used in combination. Needless to say, a positive electrode active material other than the above-described positive electrode active materials may be used. In a preferred embodiment, the positive electrode active material layer 15 constituting the lithium secondary battery according to the present embodiment includes a layered rock salt-type active material (e.g., Li (Ni-Mn-Co)O₂) containing lithium and cobalt as positive electrode active materials, from the viewpoint of output characteristics.

The content of the positive electrode active material in the positive electrode active material layer is not particularly limited, but for example, is preferably within a range of 30 to 99 mass%, more preferably within a range of 40 to 90 mass%, and still more preferably within a range of 45 to 80 mass%.

In the lithium secondary battery according to the present embodiment, it is preferable that the positive electrode active material layer 15 further contains a solid electrolyte. Examples of the solid electrolyte include a sulfide solid electrolyte, a resin solid electrolyte, and an oxide solid electrolyte. As the solid electrolyte, a material having a desired volume modulus can be appropriately selected according to the degree of volume expansion accompanying charge and discharge of the electrode active material to be used.

In a preferred embodiment of the secondary battery according to the present embodiment, the solid electrolyte preferably includes a resin solid electrolyte from the viewpoint of following the volume change of the electrode active material associated with charging and discharging. Examples of the resin solid electrolyte include fluorine resins, polyethylene oxide, polyacrylonitrile, polyacrylates, derivatives of these materials, and copolymers of these materials. Examples of the fluorine resins include fluorine resins containing vinylidene fluoride (VdF), hexafluoropropylene (HFP), tetrafluoroethylene (TFE), derivatives of these compounds, and the like as constituent units. Specific examples thereof include homopolymers such as polyvinylidene fluoride (PVdF), polyhexafluoropropylene (PHFP), and polytetrafluoroethylene (PTFE), and a binary copolymer such as a copolymer of VdF and HFP.

In another preferred embodiment of the secondary battery according to the present embodiment, the solid electrolyte is preferably a sulfide solid electrolyte containing an S element, more preferably a sulfide solid electrolyte containing a Li element, an M element, and an S element, the M element is a sulfide solid electrolyte containing at least one element selected from the group consisting of P, Si, Ge, Sn, Ti, Zr, Nb, Al, Sb, Br, Cl, and I, and still more preferably a sulfide solid electrolyte containing an S element, a Li element, and a P element, from the viewpoint of exhibiting excellent lithium ion conductivity and following the volume change of the electrode active material associated with charging and discharging. The sulfide solid electrolyte may have a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS. As the sulfide solid electrolyte, for example, LGPS expressed by Li₍₄₋ₓ₎Ge₍₁₋ₓ₎PₓS₄ (x satisfies 0 < x < 1) or the like may be used. More specifically, examples of the sulfide solid electrolyte include LPS(Li₂S-P₂S₅), Li₇P₃S₁₁, Li_{3.2}P_{0.96}S, Li_{3.25}Ge_{0.25}P_{0.75}S₄, Li₁₀GeP₂S₁₂, Li₆PS₅X (where X is Cl, Br, or I), and the like. The description of "Li₂S-P₂S₅" means a sulfide solid electrolyte obtained by using a raw material composition containing Li₂S and P₂S₅, and the same applies to other descriptions. Above all, the sulfide solid electrolyte has high ion conductivity and low volume modulus, and thus is preferably selected from the group consisting of LPS (Li₂S-P₂S₅), Li₆PS₅X (wherein X is Cl, Br, or I), Li₇P₃S₁₁, Li_{3.2}P_{0.96}S, and Li₃PS₄ from the viewpoint of following the volume change of the electrode active material associated with charging and discharging.

The content of the solid electrolyte in the positive electrode active material layer is not particularly limited, but is, for example, preferably within a range of 1 to 70 mass%, more preferably within a range of 10 to 60 mass%, and still more preferably within a range of 20 to 55 mass%.

The positive electrode active material layer may further contain at least one of a conductive aid and a binder in addition to the positive electrode active material and the solid electrolyte. The thickness of the positive electrode active material layer varies depending on the configuration of the intended lithium secondary battery, but is, for example, preferably within the range of 0.1 to 1000 µm, and more preferably within a range of 40 to 100 µm.

### [Solid Electrolyte Layer]

The solid electrolyte layer is a layer interposed between the positive electrode active material layer and the negative electrode current collector during discharging, and contains a solid electrolyte (usually as a main component). Since the specific form of the solid electrolyte contained in the solid electrolyte layer is the same as that described above, the detailed description thereof is omitted here.

The content of the solid electrolyte in the solid electrolyte layer is preferably, for example, within a range of 10 to 100 mass%, more preferably within a range of 50 to 100 mass%, and still more preferably within a range of 90 to 100 mass% with respect to the total mass of the solid electrolyte layer. The solid electrolyte layer may further contain a binder in addition to the solid electrolyte described above. The thickness of the solid electrolyte layer varies depending on the configuration of the intended lithium secondary battery, but is, for example, preferably within a range of 0.1 to 1000 µm, and more preferably within a range of 10 to 40 µm.

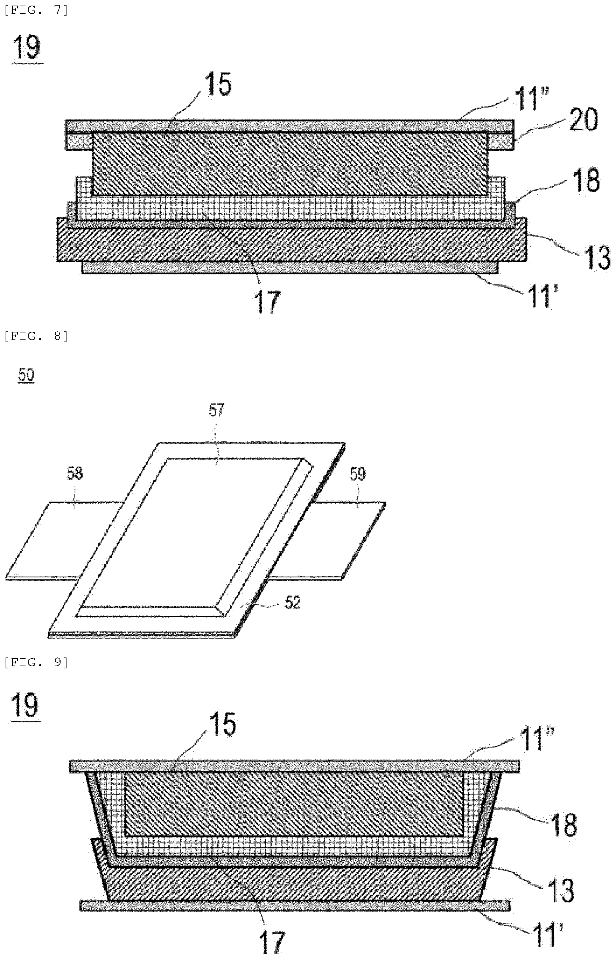

As described above with reference to FIG. 2, from the viewpoint of preventing a short circuit due to contact between the negative electrode active material layer and the positive electrode active material layer, at least a part (preferably the entire periphery) of the outer peripheral edge portion of the solid electrolyte layer is preferably extended to the side surface of the positive electrode active material layer. In a more preferred embodiment, when the outer peripheral edge portion of the solid electrolyte layer is extended to the positive electrode current collector, and the solid electrolyte layer is disposed to cover the entire side surface of the positive electrode active material layer, and the effect of preventing a short circuit is particularly high. At this time, the outer peripheral end of the solid electrolyte layer covering the side surface of the positive electrode active material layer may be disposed so as to be substantially parallel to the side surface of the positive electrode active material layer, or may be disposed in a tapered shape so as to be inclined at a certain angle with respect to the side surface (see, for example, FIG. 9).

### [Negative Electrode Current Collector]

The negative electrode current collector is a conductive member that functions as a flow path for electrons emitted from a negative electrode toward a power source or flowing from an external load toward the negative electrode with the progression of the battery reaction (charge and discharge reaction). A material constituting the negative electrode current collector is not particularly limited. As the material constituting the negative electrode current collector, for example, a metal or a resin having conductivity can be adopted. The thickness of the negative electrode current collector is not particularly limited, but is, for example, from 10 to 100 µm.

### [Negative Electrode Active Material Layer]

The lithium secondary battery according to the present embodiment is a so-called lithium-deposition-type lithium secondary battery in which lithium metal is deposited on a negative electrode current collector in a charging process. A layer made of the lithium metal deposited on the negative electrode current collector in this charging process is a negative electrode active material layer of the lithium secondary battery according to the present embodiment. Therefore, the thickness of the negative electrode active material layer increases with the progress of the charging process, and the thickness of the negative electrode active material layer decreases with the progress of the discharging process. The negative electrode active material layer need not be present when the battery has been completely discharged. However, in some cases, a negative electrode active material layer made of a certain amount of lithium metal may be disposed when the battery has been completely discharged. The thickness of the negative electrode active material layer (lithium metal layer) when the battery has been completely discharged is not particularly limited, but is usually from 0.1 to 1000 µm.

### [First Functional Layer]

In the lithium secondary battery according to the present embodiment, the first functional layer is provided on at least a part of a principal surface of the solid electrolyte layer facing the negative electrode current collector (preferably, the entire principal surface) and at least a part of a side surface of the solid electrolyte layer (preferably, the entire side surface). The first functional layer is a layer having electronic insulation properties and lithium ion conductivity. Further, the first functional layer is desired to be more stable in reductive decomposition due to contact with lithium metal than the solid electrolyte. Here, the term "to be more stable in reductive decomposition due to contact with lithium metal than the solid electrolyte" means that when a tendency of the solid electrolyte constituting the solid electrolyte layer to undergo reductive decomposition due to contact with lithium metal is compared with a tendency of the material constituting the first functional layer to undergo reductive decomposition due to contact with lithium metal, the latter tendency is smaller. Whether or not the material constituting the first functional layer satisfies this condition can be determined by confirming whether or not the current flowing through the first functional layer is smaller than the current flowing through the solid electrolyte layer when a voltage is swept near 0 V [vs.Li/Li+] by a cyclic voltammetry method using each of the solid electrolyte layer and the first functional layer as a working electrode and using lithium metal as a counter electrode.

In a case where the first functional layer is also disposed on the side surface of the solid electrolyte layer, even when lithium metal deposited on the surface of the negative electrode current collector during charging is pushed out from the outer peripheral end of the solid electrolyte layer due to confining pressure from the pressurizing member, contact between the solid electrolyte layer and the negative electrode active material layer is prevented, resulting in suppression of deterioration of the solid electrolyte layer due to reductive decomposition. Further, the effective area of the lithium metal facing the positive electrode active material layer with the first functional layer and the solid electrolyte layer interposed therebetween is further increased, which leads an advantage that the charge and discharge efficiency can be further improved. Here, whether or not the first functional layer of the lithium secondary battery according to the present embodiment is disposed can be determined, for example, by confirming whether or not a layer corresponding to the first functional layer is present on the principal surface and the side surface of the solid electrolyte layer by SEM-EDX observation of a cross section of the lithium secondary battery, and then analyzing the composition by elemental analysis or the like. Further, in a case where it is difficult to make a determination by the above method because the first functional layer is thin or the like, it is also possible to make a determination by analyzing a layer corresponding to the first functional layer while performing etching by the XPS method.

Note that the material constituting the first functional layer as described above is not particularly limited, and any material that satisfies the above-described conditions can be suitably used. For example, the first functional layer preferably contains one or more materials selected from the group consisting of lithium halide (lithium fluoride (LiF), lithium chloride (LiCl), lithium bromide (LiBr), lithium iodide (LiI)), a lithium ion conductive polymer, a composite metal oxide represented by Li-M-O (M is one or more metal elements selected from the group consisting of Mg, Au, Al, Sn, and Zn), and a Li-Ba-TiO₃ composite oxide. All of these materials are particularly stable in reductive decomposition due to contact with lithium metal, and thus are suitable as materials constituting the first functional layer. In particular, when the first functional layer contains lithium halide, the rate characteristics of the battery can be improved. This is considered to be because the activation barrier when lithium ions diffuse through the solid electrolyte layer and the first functional layer during charging and discharging is lowered, and thus the diffusion rate of lithium ions at the interface is improved, and the area of contact between the first functional layer and the negative electrode active material layer (metal lithium layer) is sufficiently secured.

The average thickness of the first functional layer is not particularly limited, and the first functional layer may be disposed to have a thickness that exhibits the above-described function. However, when the average thickness of the first functional layer is too large, the internal resistance is increased, and this causes a decrease in charge and discharge efficiency. Accordingly, it is preferable that the average thickness of the first functional layer is smaller than the average thickness of the solid electrolyte layer. Meanwhile, when the average thickness of the first functional layer is too small, there is a possibility that a sufficient protective effect by providing the first functional layer cannot be obtained. From these viewpoints, the average thickness of the first functional layer is preferably from 0.5 nm to 20 µm, and more preferably from 5 nm to 10 um. The "average thickness" of the first functional layer means a value calculated as an arithmetic average value of the thicknesses measured at several to several tens of different portions of the first functional layer constituting the lithium secondary battery. In addition, from the viewpoint of further improving the rate characteristics of the battery, the arithmetic average roughness (Ra; measured in accordance with JIS B 0601: 2013) of the principal surface of the first functional layer facing the negative electrode current collector is preferably less than 1 um, more preferably 100 nm or less, still more preferably 50 nm or less, particularly preferably 20 nm or less, and most preferably 10 nm or less. Meanwhile, the lower limit of Ra is not particularly limited, but is actually 1 nm or more.

### [Insulating Layer]

In the lithium secondary battery according to the present embodiment, as illustrated in FIG. 6, when the power-generating element 21 is viewed in planar view, it is preferable that at least a part of an outer peripheral end of the positive electrode active material layer 15 is disposed inside an outer peripheral end of the positive electrode current collector 11", and an insulating layer 20 made of an electronic insulating material is disposed on a surface of the positive electrode current collector 11" on the side of the solid electrolyte layer 17, where the positive electrode active material layer 15 is not disposed on the surface. With such a configuration, there is an advantage that even when lithium metal deposited on the surface of the negative electrode current collector during charging is pushed out from the outer peripheral end of the solid electrolyte layer due to confining pressure from the pressurizing member, contact between the positive electrode active material layer 15 and the negative electrode active material layer 13 is prevented, resulting in suppression of occurrence of a short circuit. In the embodiment illustrated in FIG. 6, the insulating layer 20 is disposed such that the entire side surface of the positive electrode active material layer 15 is covered with the insulating layer 20. As described above, when at least a part of the outer peripheral edge portion of the solid electrolyte layer 17 is extended to at least a part of the side surface of the positive electrode active material layer 15, and at least a part of the outer periphery of the positive electrode active material layer 15 is covered with any one or more of the solid electrolyte layer 17, the first functional layer 18, and the insulating layer 20, cycle durability of the battery is significantly improved. Thus, this is preferred. In such a configuration, it is more preferable that the first functional layer contains a material (e.g., a lithium ion conductive polymer) having a Young's modulus of less than 100 MPa. With such a configuration, the first functional layer can sufficiently follow expansion and shrinkage of the positive electrode active material layer during charging and discharging, and exposure of the side surface of the positive electrode active material layer as well as occurrence of a short circuit due to the exposure are prevented. As a result, the cycle durability of the battery can be improved. However, as in the embodiment illustrated in FIG. 7, the insulating layer 20 may be disposed such that a part of the side surface of the positive electrode active material layer 15 is exposed.

Note that the material constituting the insulating layer as described above is not particularly limited, and any material that satisfies the above-described conditions can be suitably used. An example of the material constituting the insulating layer includes a material in which an inorganic powder such as aluminum oxide, zirconium oxide, silicon oxide, or S-B-Na-based glass frit is dispersed in a solid electrolyte constituting the solid electrolyte layer. However, the material constituting the insulating layer is preferably a resin material or a rubber material. Since these materials have high durability and elasticity, for example, even when internal stress is generated in a region where the insulating layer is formed, the insulating layer extends without being broken. Thus, occurrence of a short circuit can be effectively prevented. Examples of the resin materials include thermoplastic resins such as polyethylene (e.g., low density polyethylene, high density polyethylene, and the like), a polyolefin resin such as polypropylene, a polyester resin such as polyethylene terephthalate (PET), a polyvinyl chloride resin, an acrylic resin, a methacrylic resin, an acrylonitrile-butadiene-styrene resin, a vinyl acetate resin, an ethylenevinyl acetate resin, and a styrene-butadiene resin; and thermosetting resins such as a silicone resin, a urethane resin, a melamine resin, a thermosetting acrylic resin, a urea resin, a phenol resin, a resorcin resin, an alkyl resorcin resin, an epoxy resin, and thermosetting polyester. Examples of the rubber material include latex rubber, chloroprene rubber (CR), styrene-butadiene rubber (SBR), ethylenepropylene-diene rubber (EPDM), and acrylonitrile-butadiene rubber (NBR).

### [Second Functional Layer]

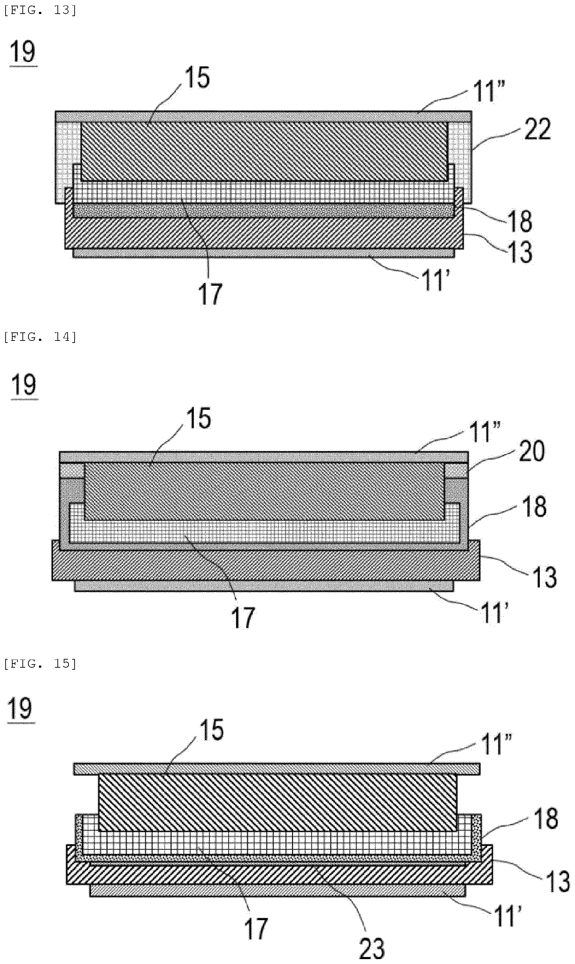

In the lithium secondary battery according to the present embodiment, as illustrated in FIG. 15, it is preferable that a second functional layer 23 containing a simple substance of an element capable of forming an alloy with lithium or a compound containing the element is further provided on at least a part of a principal surface of the first functional layer 18 facing the negative electrode current collector 11'. With such a configuration, the cycle durability of the battery can be further improved. This is considered to be because interposing the second functional layer 23 between the first functional layer 18 and the negative electrode current collector 11' makes it possible to reduce the energy during deposition of lithium ions as metal lithium in a charging process, resulting in charging and discharging at a higher current density. Here, examples of the element capable of forming an alloy with lithium contained in the second functional layer include at least one selected from the group consisting of gold, silver, zinc, magnesium, aluminum, platinum, silicon, tin, bismuth, indium, and palladium. The second functional layer may include a compound containing these elements in addition to simple substances of these elements. Examples of the compound include oxides such as SiOₓ and SnOₓ, and alloys including transition metal elements such as a Ni-Si alloy, a Ti-Si alloy, a Mg-Sn alloy, and a Fe-Sn alloy. Among them, simple substances of the above elements are preferably included, and a simple substance of silver, zinc, or magnesium is more preferably included.

Although the case where the secondary battery according to the present embodiment is an all-solid lithium secondary battery is described as an example, the lithium secondary battery according to the present embodiment need not be an all solid type. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur. As the liquid electrolyte (electrolyte solution), a solution containing a known lithium salt dissolved in a known organic solvent is used. The liquid electrolyte (electrolyte solution) may further contain an additive other than the organic solvent and the lithium salt. These additives may be used singly or in combination of two or more kinds thereof. The amount of the additive used in the electrolyte solution can be appropriately adjusted.

### Examples

Hereinbelow, the present invention will be described in more detail with reference to Examples. However, the technical scope of the present invention is not limited to the following Examples. Hereinafter, the operation was performed in a glove box. Further, the instruments, devices, and the like used in the glove box were sufficiently dried in advance.

### <Example 1>

### [Production of Evaluation Cell]

### (Production of Positive Electrode)n

First, LiNi_{0.8}Mn_{0.1}Co_{0.1}O₂ as a positive electrode active material, acetylene black as a conductive aid, and a sulfide solid electrolyte (LPS(Li₂S-P₂S₅)) were weighed to give a mass ratio of 50 : 30 : 20, these materials were mixed in a glove box using an agate mortar, and then the resultant mixture was further mixed and stirred in a planetary ball mill. 2 parts by mass of styrene-butadiene rubber (SBR) was added to 100 parts by mass of the resultant mixed powder, and a solvent: mesitylene was added thereto to prepare a positive electrode active material slurry. Next, the positive electrode active material slurry prepared above was applied to a surface of aluminum foil as a positive electrode current collector, and the surface was dried and subjected to a pressing process to form a positive electrode active material layer (thickness: 50 um) . Thus, a positive electrode was produced.

### (Production of Solid Electrolyte Layer and First Functional Layer)

2 parts by mass of styrene-butadiene rubber (SBR) was added to 100 parts by mass of sulfide solid electrolyte (LPS(Li₂S-P₂S₅)), and a solvent: mesitylene was added thereto to prepare a solid electrolyte slurry. Then, a surface of stainless steel foil as a support was coated with the solid electrolyte slurry prepared above and dried to form a solid electrolyte layer (thickness: 30 um) as a free standing film. Thereafter, a first functional layer (thickness: 20 nm) made of lithium fluoride (LiF) was formed by sputtering over one principal surface and side surfaces of the obtained solid electrolyte layer.

### (Production of Evaluation Cell)

The solid electrolyte layer having the first functional layer produced as described above was transferred by cold isostatic pressing (CIP) to the side of the positive electrode active material layer of the positive electrode produced as described above such that the exposed surface of the solid electrolyte layer faced the positive electrode active material layer. At this time, the pressure during the CIP was controlled such that the outer peripheral edge portion of the solid electrolyte layer was extended to the middle of the side surface of the positive electrode active material layer over the entire periphery. Finally, stainless steel foil as a negative electrode current collector was laminated on the exposed surface of the first functional layer to produce an evaluation cell (lithium-deposition-type all-solid lithium secondary battery) in the same form as in FIG. 2 except for the absence of the negative electrode active material layer.

### [Evaluation of Evaluation Cell (Measurement of Charge and Discharge Efficiency)]

A positive electrode lead and a negative electrode lead were connected to the positive electrode current collector and the negative electrode current collector of the evaluation cell produced above, respectively. Then, the evaluation cell was charged and discharged for 2 cycles according to the following charge and discharge test conditions. At this time, the charge and discharge test described below was performed while applying a confining pressure of 5 [MPa] in the direction of lamination of the evaluation cell using the pressurizing member.

### (Charge and Discharge Test Conditions)

1) Charge and discharge conditions
   [Voltage range] 3.0 to 4.3 V
   [Charging process] CCCV (0.01 C cut-off)
   [Discharging process] CC
   [Charge and discharge rate] 0.2 C
   (Stop for 30 minutes after charging and discharging)
2) Evaluation temperature: 298 K (25°C)

The evaluation cell was charged from 3.0 V to 4.3 V at 0.2 C in a constant current/constant voltage (CCCV) mode in a charging process (lithium metal was deposited on the negative electrode current collector) in a thermostatic bath set at the above evaluation temperature using a charge and discharge tester (0.01 C cut-off). Thereafter, in the discharging process (lithium metal on the negative electrode current collector was dissolved), a constant current (CC) mode was used, and the evaluation cell was discharged from 4.3 V to 3.0 V at 0.2 C. Here, 1 C is a current value at which the cell is fully charged (100% charged) when charged at the current value for 1 hour. Here, the charging capacity (capacity of the cell during charging) and the discharging capacity (capacity of the cell during discharging) were each measured during charging and discharging processes of the evaluation cell. Then, the charge and discharge efficiency (coulombic efficiency) was calculated as a proportion of the battery capacity during discharging to the battery capacity during second cycle charging.

As a result, the charge and discharge efficiency in this example was 99%.

### <Example 2>

An evaluation cell in the same form as in FIG. 6 except for the absence of the negative electrode active material layer was produced in the same manner as in Example 1 described above, except that a resin layer (insulating layer) made of polyethylene terephthalate (PET) was disposed on the surface of the outer peripheral edge portion of the positive electrode current collector so as to surround the outer periphery (the entire exposed side surface) of the positive electrode active material layer. Then, the charge and discharge efficiency (coulombic efficiency) was calculated in the same manner as described above, and the charge and discharge efficiency in this example was 99%.

### <Example 3>

An evaluation cell in the same form as in FIG. 7 except for the absence of the negative electrode active material layer was produced in the same manner as in Example 2 described above, except that a resin layer made of polyethylene terephthalate (PET) was disposed on the surface of the outer peripheral edge portion of the positive electrode current collector so as to surround the outer periphery (part of the exposed side surface) of the positive electrode active material layer and the sputtering conditions were controlled such that the outer peripheral edge portion of the first functional layer was extended to the middle of the side surface of the solid electrolyte layer over the entire periphery. Then, the charge and discharge efficiency (coulombic efficiency) was calculated in the same manner as described above, and the charge and discharge efficiency in this example was 99%.

### <Example 4>

The solid electrolyte layer before formation of the first functional layer was transferred to the side of the positive electrode active material layer of the positive electrode by cold isostatic pressing (CIP). At this time, the transfer conditions were controlled such that the solid electrolyte layer on the side surface of the positive electrode active material layer widened toward the positive electrode current collector side while covering the entire exposed surface and side surface of the positive electrode active material layer as illustrated in FIG. 9. Thereafter, an evaluation cell in the same form as in FIG. 9 except for the absence of the negative electrode active material layer was produced in the same manner as in Example 1 described above, except that the first functional layer (thickness: 20 nm) made of lithium fluoride (LiF) was formed by sputtering over one principal surface and side surfaces of the obtained solid electrolyte layer. Then, the charge and discharge efficiency (coulombic efficiency) was calculated in the same manner as in Example 1, and the charge and discharge efficiency in this example was 99%.

### <Example 5>

An evaluation cell in the same form as in FIG. 3 except for the absence of the negative electrode active material layer was produced in the same manner as in Example 1 described above, except that the pressure during the CIP was controlled such that the outer peripheral edge portion of the solid electrolyte layer was not extended to the side surface of the positive electrode active material layer over the entire periphery, and the sputtering conditions were controlled such that the outer peripheral edge portion of the first functional layer was extended to the middle of the side surface of the solid electrolyte layer over the entire periphery. Then, the charge and discharge efficiency (coulombic efficiency) was calculated in the same manner as described above, and the charge and discharge efficiency in this example was 99%.

For each of Examples 1 to 5 described above, the thickness of the first functional layer was changed from 20 nm to 5 nm, 100 nm, 250 nm, 1 µm, 5 um, or 15 um, such evaluation cells as described above were produced, and the charge and discharge efficiency was measured. As a result, it was observed that the same results as those described above were obtained in each of the cases.

### <Comparative Example 1>

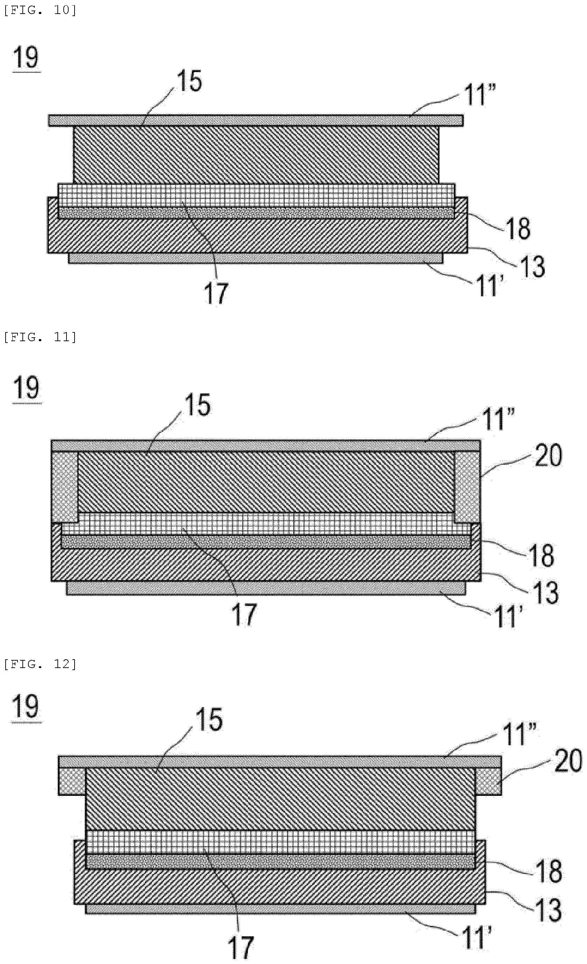

An evaluation cell in the same form as in FIG. 10 except for the absence of the negative electrode active material layer was produced in the same manner as in Example 5 described above, except that the sputtering conditions were controlled such that the outer peripheral edge portion of the first functional layer was not extended to the side surface of the solid electrolyte layer over the entire periphery. Then, the charge and discharge efficiency (coulombic efficiency) was calculated in the same manner as described above, and the charge and discharge efficiency in this comparative example was 83%. The evaluation cell after the charge and discharge test was disassembled and observed, and then it was observed that the side surface of the solid electrolyte layer was deteriorated and discolored. In this comparative example, the first functional layer is not disposed so as to be extended to the side surface of the solid electrolyte layer. For this reason, it is considered that the lithium metal deposited on the surface of the negative electrode current collector during charging was pushed out from the outer peripheral end of the solid electrolyte layer due to confining pressure from the pressurizing member and brought into contact with the side surface of the solid electrolyte layer as illustrated in FIG. 10, whereby the solid electrolyte constituting the solid electrolyte layer was deteriorated due to reductive decomposition, the internal resistance was increased, and the charge and discharge efficiency was decreased.

### <Comparative Example 2>

An evaluation cell in the same form as in FIG. 11 except for the absence of the negative electrode active material layer was produced in the same manner as in Comparative Example 1 described above, except that a resin layer (insulating layer) made of polyethylene terephthalate (PET) was disposed on the surface of the outer peripheral edge portion of the positive electrode current collector so as to surround the outer periphery (the entire exposed side surface) of the positive electrode active material layer and have a structure in which the height of the insulating layer was larger than the thickness of the positive electrode active material layer. Then, a charge and discharge test was conducted in the same manner as described above, as a result of which a short circuit occurred, and the charge and discharge efficiency could not be measured. The evaluation cell after the charge and discharge test was disassembled and observed, and then it was observed that the outer peripheral edge portion of the solid electrolyte layer fractured. In this comparative example, the insulating layer having a thickness larger than the thickness of the positive electrode active material layer is provided. For this reason, it is considered that an internal stress was generated at the interface between the insulating layer and the solid electrolyte layer due to the confining pressure, whereby the outer peripheral edge portion of the solid electrolyte layer fractured, and a short circuit was caused by the fracture.

### <Comparative Example 3>

An evaluation cell in the same form as in FIG. 12 except for the absence of the negative electrode active material layer was produced in the same manner as in Example 3 described above, except that the sputtering conditions were controlled such that the outer peripheral edge portion of the first functional layer was not extended to the side surface of the solid electrolyte layer over the entire periphery, and the size of the positive electrode active material layer was the same as the size of the solid electrolyte layer. Then, a charge and discharge test was conducted in the same manner as described above, as a result of which a short circuit occurred, and the charge and discharge efficiency could not be measured. In this comparative example, the size of the positive electrode active material layer is the same as the size of the solid electrolyte layer. Accordingly, when the lithium metal deposited on the surface of the negative electrode current collector during charging is pushed out from the outer peripheral end of the solid electrolyte layer due to confining pressure from the pressurizing member, the lithium metal easily comes into contact with the side surface of the positive electrode active material layer. Consequently, a short circuit is considered to have occurred.

### <Comparative Example 4>

An evaluation cell in the same form as in FIG. 13 except for the absence of the negative electrode active material layer was produced in the same manner as in Comparative Example 1 described above, except that the pressure during the CIP was controlled such that the outer peripheral edge portion of the solid electrolyte layer was extended to the middle of the side surface of the positive electrode active material layer over the entire periphery, and constituent members other than the negative electrode current collector of the power-generating element were sealed using a sealing material (epoxy resin). Then, a charge and discharge test was conducted in the same manner as described above, as a result of which a short circuit occurred, and the charge and discharge efficiency could not be measured. In this comparative example, even when the constituent members are sealed with an epoxy resin, the lithium metal deposited on the surface of the negative electrode current collector during charging is pushed out from the outer peripheral end of the solid electrolyte layer due to confining pressure from the pressurizing member, and reaches the side surface of the positive electrode active material layer from the gap between the epoxy resin and the solid electrolyte layer. Consequently, a short circuit is considered to have occurred.

### <Example 6>

An evaluation cell was produced in the same manner as in Example 1 described above, except that the thickness of the first functional layer was changed to 40 nm.

### <Example 7>

An evaluation cell was produced in the same manner as in Example 6 described above, except that the material constituting the first functional layer was changed from lithium fluoride to lithium bromide (LiBr) .

### <Example 8>

An evaluation cell was produced in the same manner as in Example 6 described above, except that the material constituting the first functional layer was changed from lithium fluoride to lithium chloride (LiCl) .

### <Example 9>

An evaluation cell was produced in the same manner as in Example 6 described above, except that the material constituting the first functional layer was changed from lithium fluoride to lithium iodide (LiI).

### <Example 10>

An evaluation cell was produced in the same manner as in Example 6 described above, except that the material constituting the first functional layer was changed from lithium fluoride to lithium carbonate (Li₂CO₃).

### <Example 11>

An evaluation cell was produced in the same manner as in Example 6 described above, except that the material constituting the first functional layer was changed from lithium fluoride to lithium oxide (Li₂O).

### <Example 12>

An evaluation cell was produced in the same manner as in Example 8 described above, except that the thickness of the first functional layer was changed to 10 µm.

### <Example 13>

A powder of lithium chloride was dispersed in an appropriate amount of mesitylene, SBR was added thereto in an amount of 1 mass% relative to lithium chloride, and the resultant mixture was mixed to prepare a slurry. An evaluation cell was produced in the same manner as in Example 8 described above, except that the slurry was applied and dried to form the first functional layer (thickness: 2 um) .

### [Measurement of Arithmetic Average Roughness (Ra) of Surface of First Functional Layer]

An arithmetic average roughness (Ra) of a principal surface of the first functional layer, the surface facing the negative electrode current collector, was measured in accordance with JIS B 0601: 2013. The results are shown in Table 1 below.

### [Evaluation of Evaluation Cell (Measurement of Charge Rate Characteristics)]

A positive electrode lead and a negative electrode lead were connected to the positive electrode current collector and the negative electrode current collector of each of the evaluation cells produced in Examples 6 to 13, respectively, and the evaluation cells were charged and discharged at 1.0 C or 0.2 C for 3 cycles under the same charge and discharge test conditions as described above, except that the evaluation temperature was changed to 333 K (60°C). Then, the percentage [%] of the charging capacity (0.2 C) at the third cycle to the charging capacity (1.0 C) at the third cycle was calculated and used as charge rate characteristics. The results are shown in Table 1 below.

**[Table 1]**

| | First functional layer | | | Charge rate characteristics 1.0 C/0.2 C [%] |
|---|---|---|---|---|
| | Constituent material | Thickness [nm] | Arithmetic average roughness Ra [nm] | |
| Example 6 | LiF | 40 | 10 | 81 |
| Example 7 | LiBr | 40 | 10 | 87 |
| Example 8 | LiCl | 40 | 10 | 86 |
| Example 9 | LiI | 40 | 10 | 85 |
| Example 10 | Li₂CO₃ | 40 | 10 | 54 |
| Example 11 | Li₂O | 40 | 10 | 20 |
| Example 12 | LiCl | 10000 | 20 | 40 |
| Example 13 | LiCl | 2000 | 1000 | Short circuit ^{*1)} |

| | | | | |
|---|---|---|---|---|
| *1) Charging and discharging at 0.2 C were performed without any trouble, but a short circuit occurred during charging and discharging at 1.0 C. | | | | |

The results in Table 1 show that Examples 6 to 9 in which the first functional layer contains lithium halide exhibit excellent charge rate characteristics as compared with Examples 10 and 11 in which the first functional layer is made of other materials. In particular, it is also found that the first functional layer is more preferably made of LiBr, LiCl, or LiI. Comparison among Examples 8, 12, and 13 shows that when the arithmetic average roughness (Ra) of the principal surface of the first functional layer facing the negative electrode current collector is less than 1 um (preferably 20 nm or less, more preferably 10 nm or less), a lithium secondary battery having more excellent charge rate characteristics is obtained.

### <Example 14>

A solution obtained by dissolving polyethylene glycol (PEG (polyethylene oxide; PEO); number average molecular weight; 200000) in an appropriate amount of water was applied and drying was carried out to form the first functional layer (thickness: 2 um) . At this time, the size of the first functional layer was controlled such that the outer peripheral edge portion of the first functional layer entirely covered the side surface of the solid electrolyte layer and the side surface of the positive electrode active material layer over the entire periphery. Except for the above, an evaluation cell in the same form as in FIG. 14 except for the absence of the negative electrode active material layer was produced in the same manner as in Example 3 described above. The Young's modulus of the first functional layer measured by the sphere indentation test was 70 MPa.

### <Comparative Example 5>

An evaluation cell was produced in the same manner as in Example 14 described above, except that no first functional layer was formed.

### <Example 15>

An evaluation cell was produced in the same manner as in Example 14 described above, except that no insulating layer was formed.

### <Example 16>

A solution obtained by dissolving polyethylene glycol (PEG (polyethylene oxide; PEO); number average molecular weight; 200000) in an appropriate amount of water was applied and drying was carried out to form the first functional layer (thickness: 2 um) . At this time, the size of the first functional layer was controlled such that the first functional layer was disposed at the position illustrated in FIG. 7. Except for the above, an evaluation cell was produced in the same manner as in Example 3 described above.

### <Example 17>

The material constituting the first functional layer was changed from polyethylene glycol to an aluminum metal film (thickness: 20 nm). At this time, the first functional layer made of the aluminum metal film was formed by transferring the solid electrolyte layer such that the exposed surface of the solid electrolyte layer faced the positive electrode active material layer and performing sputtering before disposing the negative electrode current collector. Except for the above, an evaluation cell was produced in the same manner as in Example 14 described above. The Young's modulus of the first functional layer measured by the sphere indentation test was 70 GPa.

### [Evaluation of Evaluation Cell (Measurement of Charge and Discharge Cycle Characteristics)]

A positive electrode lead and a negative electrode lead were connected to the positive electrode current collector and the negative electrode current collector of each of the evaluation cells produced in Examples 14 to 17 and Comparative Example 5, respectively, and the evaluation cells were repeatedly charged and discharged under the same charge and discharge test conditions as the measurement of the charge and discharge efficiency described above, except that the evaluation temperature was changed to 333 K (60°C) and the voltage range was changed to a range of 2.5 to 4.3 V. Then, the number of cycles in which charging and discharging can be carried out until a short circuit occurred was measured. The results are shown in Table 2 below.

**[Table 2]**

| | First functional layer | | Presence or absence of insulating layer | Covering of outer periphery of positive electrode active material layer | Number of cycles in which charging and discharging can be carried out |
|---|---|---|---|---|---|
| | Constituent material | Young's modulus [MPa] | | | |
| Example 14 | PEG | 70 | Present | Covered | >100 |
| Example 15 | PEG | 70 | Absent | Uncovered | <20 |
| Example 16 | PEG | 70 | Present | Uncovered | <20 |
| Example 17 | Al | 70000 | Present | Covered | <20 |
| Comparative Example 5 | - | - | Present | Uncovered | <5 |

The results in Table 2 show that an insulating layer is disposed on a surface of the positive electrode current collector on the side of the solid electrolyte layer, where the positive electrode active material layer is not disposed on the surface, the outer peripheral edge portion of the solid electrolyte layer is extended to the side surface of the positive electrode active material layer, and the outer periphery of the positive electrode active material layer is covered with the solid electrolyte layer, the first functional layer, or the insulating layer, as a result of which the charge and discharge cycle characteristics are improved. Further, it is found that the first functional layer is made of a lithium ion conductive polymer (e.g., polyethylene glycol or the like) or the like having a small Young's modulus (specifically, it is less than 100 MPa), as a result of which charge and discharge cycle characteristics are improved.

### <Example 18>

The material constituting the first functional layer was changed from lithium fluoride to lithium chloride, and the thickness of the first functional layer was changed to 100 nm. A second functional layer made of silver was formed on the entire surface of the negative electrode current collector on the side of the first functional layer by sputtering, before stainless steel foil as the negative electrode current collector was laminated on the exposed surface of the first functional layer. Except for the above, an evaluation cell in the same form as in FIG. 15 except for the absence of the negative electrode active material layer was produced in the same manner as in Example 1 described above.

### <Example 19>

An evaluation cell was produced in the same manner as in Example 18 described above, except that the second functional layer was formed by spray-coating the entire surface of the negative electrode current collector on the side of the first functional layer with a dispersion liquid obtained by dispersing a silver powder in an appropriate amount of mesitylene and drying the spray-coated surface.

### <Example 20>

An evaluation cell was produced in the same manner as in Example 18 described above, except that the second functional layer was formed by spray-coating a region facing the negative electrode current collector, on the surface of the first functional layer on the side of the negative electrode current collector, with a dispersion liquid obtained by dispersing a silver powder in an appropriate amount of mesitylene and drying the dispersion liquid. In the obtained evaluation cell, the silver particles constituting the second functional layer were present not only between the first functional layer and the negative electrode current collector but also inside the first functional layer.

### <Example 21>

An evaluation cell was produced in the same manner as in Example 18 described above, except that the second functional layer made of silver was formed on the entire surface of the first functional layer on the side of the negative electrode current collector by sputtering before the solid electrolyte layer having the first functional layer was transferred to the side of the positive electrode active material layer of the positive electrode.

### <Example 22>

An evaluation cell was produced in the same manner as in Example 19 described above, except that the powder of silver was changed to a powder of magnesium in the production of the second functional layer.

### <Example 23>

An evaluation cell was produced in the same manner as in Example 19 described above, except that the powder of silver was changed to a powder of zinc in the production of the second functional layer.

### <Example 24>

An evaluation cell was produced in the same manner as in Example 4 described above, except that before the solid electrolyte layer having the first functional layer was transferred to the side of the positive electrode active material layer of the positive electrode, the entire surface of the first functional layer on the side of the negative electrode current collector was spray-coated with a dispersion liquid obtained by dispersing a silver powder in an appropriate amount of mesitylene and the spray-coated surface was dried to form a second functional layer made of silver on the entire surface of the first functional layer on the side of the negative electrode current collector.

### [Evaluation of Evaluation Cell (Measurement of Charge and Discharge Cycle Characteristics)]

A positive electrode lead and a negative electrode lead were connected to the positive electrode current collector and the negative electrode current collector of each of the evaluation cells produced in the above-mentioned Examples 18 to 24 and Example 1 described above, respectively, and the evaluation cells were charged and discharged for 30 cycles under the same charge and discharge test conditions as those of the measurement of the charge and discharge efficiency described above, except that the evaluation temperature was changed to 333 K (60°C) and the charge and discharge rate was changed to 1.0 C. Then, the percentage [%] of the discharging capacity at the thirtieth cycle to the discharging capacity at the first cycle was calculated and used as a capacity retention rate in charge and discharge cycles. The results are shown in Table 3 below.

**[Table 3]**

| | First functional layer | | Second functional layer | | | Capacity retention rate in charge and discharge cycles [%] |
|---|---|---|---|---|---|---|
| | Presence or absence | Disposition form | Presence or absence | Constituent material | Formation method | |
| Example 18 | Present | FIG. 2 | Present | Ag | Sputtering over surface of negative electrode collector | 99.7 |
| Example 19 | Present | FIG. 2 | Present | Ag | Spraying entire surface of negative electrode collector | 99.8 |
| Example 20 | Present | FIG. 2 | Present | Ag | Spraying region facing collector of first functional layer | 99.7 |
| Example 21 | Present | FIG. 2 | Present | Ag | Sputtering over surface of first functional layer | 99.8 |
| Example 22 | Present | FIG. 2 | Present | Mg | Spraying entire surface of negative electrode collector | 99.6 |
| Example 23 | Present | FIG. 2 | Present | Zn | Spraying entire surface of negative electrode collector | 99.7 |
| Example 24 | Present | FIG. 9 | Present | Ag | Spraying entire surface of first functional layer | 99.8 |
| Example 1 | Present | FIG. 2 | Absent | - | - | Short circuit *²⁾ |

| | | | | | | |
|---|---|---|---|---|---|---|
| *2) Charging and discharging at 0.2 C were performed without any trouble, but a short circuit occurred during charging and discharging at 1.0 C. | | | | | | |

The results in Table 3 show that the second functional layer containing a simple substance of an element capable of forming an alloy with lithium or a compound containing the element is further provided on the principal surface of the first functional layer facing the negative electrode current collector, as a result of which charge and discharge cycle characteristics are improved.

This application is based on Japanese Patent Application No. 2021-055645 filed on March 29, 2021 and Japanese Patent Application No. 2022-032266 filed on March 3, 2022, the contents of which are incorporated herein by reference in their entirety.

## Claims

1. A lithium secondary battery comprising:
a power-generating element that includes
a positive electrode in which a positive electrode active material layer containing a positive electrode active material capable of absorbing and desorbing lithium ions is disposed on a surface of a positive electrode current collector,
a negative electrode having a negative electrode current collector, where lithium metal is deposited on the negative electrode current collector during charging, and
a solid electrolyte layer interposed between the positive electrode and the negative electrode and containing a solid electrolyte; and
a pressurizing member that pressurizes the power-generating element at a predetermined pressure in a direction of lamination thereof,
wherein when the power-generating element is viewed in planar view, at least a part of an outer peripheral end of the positive electrode active material layer is located inside an outer peripheral end of the solid electrolyte layer, and
a first functional layer is provided on at least a part of a principal surface of the solid electrolyte layer facing the negative electrode current collector and at least a part of a side surface of the solid electrolyte layer, the first functional layer having electronic insulation properties and lithium ion conductivity and being more stable in reductive decomposition due to contact with lithium metal than the solid electrolyte.

2. The lithium secondary battery according to claim 1, wherein at least a part of an outer peripheral edge portion of the solid electrolyte layer is extended to at least a part of a side surface of the positive electrode active material layer.

3. The lithium secondary battery according to claim 1 or 2, wherein when the power-generating element is viewed in planar view, an outer peripheral end of the negative electrode current collector is located inside the outer peripheral end of the solid electrolyte layer and is located outside the outer peripheral end of the positive electrode active material layer.

4. The lithium secondary battery according to any one of claims 1 to 3, wherein the first functional layer contains one or more materials selected from the group consisting of lithium halide, a lithium ion conductive polymer, a composite metal oxide represented by Li-M-O, where M is one or more metal elements selected from the group consisting of Mg, Au, Al, Sn and Zn, and a Li-Ba-TiO₃ composite oxide.

5. The lithium secondary battery according to claim 4, wherein the first functional layer contains lithium halide.

6. The lithium secondary battery according to any one of claims 1 to 5, wherein an average thickness of the first functional layer is smaller than an average thickness of the solid electrolyte layer.

7. The lithium secondary battery according to any one of claims 1 to 6, wherein the average thickness of the first functional layer is from 0.5 nm to 20 µm.

8. The lithium secondary battery according to claim 7, wherein the average thickness of the first functional layer is from 5 nm to 10 µm.

9. The lithium secondary battery according to any one of claims 1 to 8, wherein an arithmetic average roughness (Ra) of a principal surface of the first functional layer facing the negative electrode current collector is less than 1 µm.

10. The lithium secondary battery according to any one of claims 1 to 9, wherein when the power-generating element is viewed in planar view, at least a part of an outer peripheral end of the positive electrode active material layer is located inside an outer peripheral end of the positive electrode current collector, and
an insulating layer made of an electronic insulating material is disposed on a surface of the positive electrode current collector on the side of the solid electrolyte layer, where the positive electrode active material layer is not disposed on the surface.

11. The lithium secondary battery according to claim 10, wherein at least a part of an outer peripheral edge portion of the solid electrolyte layer is extended to at least a part of a side surface of the positive electrode active material layer, and at least a part of an outer periphery of the positive electrode active material layer is covered with any one or more of the solid electrolyte layer, the first functional layer, and the insulating layer.

12. The lithium secondary battery according to claim 11, wherein the first functional layer contains a material having a Young's modulus of less than 100 MPa.

13. The lithium secondary battery according to claim 12, wherein the first functional layer contains a lithium-ion conductive polymer.

14. The lithium secondary battery according to any one of claims 1 to 13, wherein a second functional layer containing a simple substance of an element capable of forming an alloy with lithium or a compound containing the element is further provided on at least a part of the principal surface of the first functional layer facing the negative electrode current collector.

15. The lithium secondary battery according to claim 14, wherein the element capable of forming an alloy with lithium includes at least one selected from the group consisting of gold, silver, zinc, magnesium, aluminum, platinum, silicon, tin, bismuth, indium, and palladium.

16. The lithium secondary battery according to any one of claims 1 to 15, wherein the solid electrolyte contained in the solid electrolyte layer contains an S element.

17. The lithium secondary battery according to any one of claims 1 to 16, wherein the solid electrolyte contained in the solid electrolyte layer is selected from the group consisting of Li₂S-P₂S₅, Li₆PS₅X (where X is Cl, Br, or I), Li₇P₃S₁₁, Li_{3.2}P_{0.96}S, and Li₃PS₄.
